# EUROPÄISCHE PATENTSCHRIFT

(11) **EP 2 721 741 B1**
(45) Veröffentlichungstag und Bekanntmachung des Hinweises auf die Patenterteilung: **05.08.2020**
(21) Anmeldenummer: 12733445.6
(22) Anmeldetag: 22.06.2012
(51) Int. Cl.: H04B 3/54, B61G 5/10

(54) **DATENÜBERTRAGUNGSVORRICHTUNG, SCHIENENFAHRZEUGSÜBERGANGSEINHEIT UND SCHIENENFAHRZEUGVERBAND**
DATA TRANSMISSION DEVICE, RAILWAY VEHICLE JUNCTION UNIT AND RAIL VEHICLE COMBINATION
DISPOSITIF DE TRANSMISSION DE DONNÉES, UNITÉ DE TRANSITION ENTRE VÉHICULES FERROVIAIRES ET RAME DE VÉHICULES FERROVIAIRES

(30) Priorität: 29.07.2011 DE 102011080097
(43) Veröffentlichungstag der Anmeldung: 23.04.2014
(73) Patentinhaber: Siemens Mobility GmbH, 81739 München (DE)
(72) Erfinder: GRIMM, Wolfgang, 91177 Thalmässing (DE); NEITE, Rudolf, 91301 Forchheim (DE)
(86) Internationale Anmeldenummer: PCT/EP2012/062056
(87) Internationale Veröffentlichungsnummer: WO 2013/017335

(56) Entgegenhaltungen:
- WO-A1-03/028299
- WO-A1-2008/100221
- WO-A2-2006/075767
- US-A1- 2006 031 590
- US-A1- 2006 031 590

## Beschreibung

Die Erfindung geht aus von einer Datenverbindung zur Herstellung einer Datenverbindung zwischen zwei koppelbaren Fahrzeugeinheiten eines Fahrzeugsverbands, insbesondere eines Verbands von Schienenfahrzeugen zur Personenbeförderung, mit einer ersten Schnittstelle, die einer ersten Fahrzeugeinheit zugeordnet ist und im gekoppelten Zustand mit einer zweiten Fahrzeugeinheit zur Herstellung der Datenverbindung durch eine Verbindung mit einer zweiten, der zweiten Fahrzeugeinheit zugeordneten Schnittstelle vorgesehen ist.

Eine einfache Bereitstellung einer Datenverbindung mit hoher Übertragungsrate zwischen zwei Fahrzeugeinheiten eines Fahrzeugsverbands ist aufgrund ungünstiger mechanischer Randbedingungen am Übergang der Fahrzeugeinheiten erschwert. Heutige Übertragungsmittel in der Form von Kabeln zur Übertragung elektrischer Signale, die für hohe Übertragungsraten ausgelegt sind, können die damit verbundenen mechanischen Anforderungen nicht erfüllen, insbesondere bei einer Anwendung in einer Schienenfahrzeugübergangseinheit.

Es sind ferner optische Übertragungsmittel bekannt, z.B. Lichtwellenleiter, die diese Anforderungen zwar erfüllen, jedoch einen hohen Kosten- und Konstruktionsaufwand darstellen.

US 2006/0031590 A1 beschreibt ein erstes Schienenfahrzeug 10 und ein zweites Schienenfahrzeug 14, die über Zugkupplungen mechanisch verbunden sind. Das erste und zweite Schienenfahrzeug enthält jeweils ein Kommunikationsnetzwerk. Die in den jeweiligen Schienenfahrzeugen angeordneten Kommunikationsnetzwerke sind datentechnisch verbunden mittels einer Kopplungsverbindung.

WO 03/028299 A1 beschreibt eine Datenkommunikation von Schienenfahrzeugen, bei denen Wagen regelmäßig verbunden und wieder getrennt werden.

Der Erfindung liegt daher die Aufgabe zugrunde, eine gattungsgemäße Datenübertragungsvorrichtung bereitzustellen, bei welcher eine Datenverbindung mit einer hohen Übertragungsrate zwischen zwei gekoppelten Fahrzeugeinheiten konstruktiv einfach und kostengünstig erreicht werden kann.

Diese Aufgabe wird durch eine Datenverarbeitungsvorrichtung gemäß Anspruch 1 gelöst. Hierdurch kann besonders konstruktiv einfach eine Verbindung mit geringen Kosten erreicht werden, die für eine Datenverbindung mit hoher Übertragungsrate ausgelegt ist und den typischen mechanischen Randbedingungen eines Übergangsbereichs zwischen zwei Fahrzeugeinheiten Rechnung trägt. Durch die Verteilung der Adern auf zwei unterschiedliche, vorzugsweise voneinander mechanisch getrennte Kabel, kann besonders vorteilhaft eine hohe Bewegungsfreiheit der Verbindung erreicht werden. Durch die Vereinigung der zumindest zwei Kabel der Verbindung zum zumindest einen Kabel der in der Fahrzeugeinheit verlegten Kabeleinheit kann ein geringer Verkabelungsaufwand in der Fahrzeugeinheit erreicht werden. Bevorzugt weist der Satz der Verbindung im gekoppelten Zustand zumindest acht Adern auf, die auf die wenigstens zwei Kabel verteilt sind. Unter einem "Kabel" soll insbesondere eine Einheit zur Aufnahme von Adern verstanden werden, die zumindest eine Umhüllung aufweist, welche die Adern umhüllt und vorzugsweise nach außen isoliert.

Weist die Verbindung im gekoppelten Zustand einen Satz von zumindest acht Adern auf, wird in diesem Zusammenhang vorgeschlagen, dass die Kabel jeweils zumindest eine Viererverseilung verdrillter Adern aufweisen, wodurch eine vorteilhafte Anordnung zweier im Wesentlichen identisch aufgebauter Kabel erreicht werden kann. Die Nutzung von Kabeln mit Viererverseilung (auch als "Sternvierer" oder in der englische fachmännischen Sprache als "Twisted Quad Cable" genannt) hat gegenüber anderen Übertragungstechniken, wie insbesondere gegenüber der Nutzung von Lichtwellenleitern, einen Kostenvorteil und ist betrieblich einfacher zu handhaben.

In einer alternativen Ausführung der Erfindung können die Kabel jeweils zumindest zwei Paare verdrillter Adern aufweisen. In dieser Ausführung sind die Kabel auch als "Twisted Pair Cable" genannt.

Vorzugsweise sind die Schnittstellen und die Verbindung zur Übertragung eines Ethernet-Signals vorgesehen. Dies eignet sich insbesondere für die Übertragung von großen Datenmengen, insbesondere für die Übertragung von passagierbezogenen Daten, wie z.B. Fahrgastinformation, Audio- und/oder Videodateien für die Unterhaltung der Passagiere usw.

In diesem Zusammenhang wird vorgeschlagen, dass die Verbindung zur Übertragung eines Ethernet-Signals mit einer Übertragungsrate von zumindest 1000 Mbit/s ausgelegt ist. In Bezug auf die Übertragung von Bild-, Audio- und/oder Videodateien kann mittels einer Ausgabeeinheit eine bildliche und/oder akustische Wiedergabe mit einer hohen Auflösung bzw. Bandbreite erreicht werden, wenn die Ausgabeeinheit über die Verbindung mit Daten versorgt wird. Hierbei weisen die Kabel jeweils vorzugsweise eine Viererverseilung oder zwei Paare verdrillter Adern auf und sind bevorzugt jeweils zu einer Übertragung von zumindest 100Mbit/s ausgelegt (auch als "100BASE-T" genannt).

Erfindungsgemäß weist das Kabel der Kabeleinheit einen Satz von acht Adern, z.B. in der Form von vier Paaren verdrillter Adern, auf. Dies eignet sich insbesondere bei einer Ausführung der Verbindung zwischen den Fahrzeugeinheiten, in welcher die Verbindung zumindest acht Adern aufweist. Somit kann eine Kabeleinheit zur Verfügung gestellt werden, die die weniger strengen mechanischen Anforderungen eines Verlegens innerhalb einer Fahrzeugeinheit erfüllt und eine hohe, an die Anordnung des Kabelpaares der Datenübertragungsvorrichtung angepasste Übertragungsrate aufweist.

Ferner wird ein Schienenfahrzeugsverband mit einem Satz von Fahrzeugeinheiten vorgeschlagen, die paarweise mittels einer Schienenfahrzeugsübergangseinheit miteinander gekoppelt sind.

Zu den vorteilhaften Wirkungen der Schienenfahrzeugsübergangseinheit und des Schienenfahrzeugsverbands wird auf die obige Ausführungen bezüglich der Datenübertragungsvorrichtung verwiesen.

Ein Ausführungsbeispiel der Erfindung ist in den Figuren gezeigt. Es zeigen:
- Figur 1:: einen Schienenfahrzeugsverband mit einer Schienenfahrzeugsübergangseinheit, die eine Datenübertragungsvorrichtung aufweist, und
- Figur 2:: eine Detailansicht der Datenübertragungsvorrichtung in einer Schnittansicht.

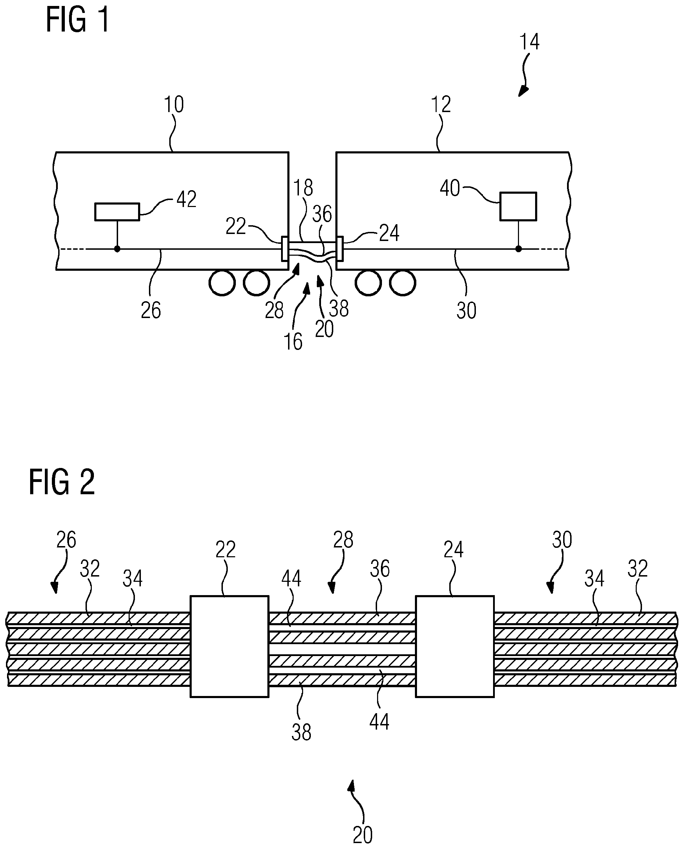

Figur 1 zeigt zwei Fahrzeugeinheiten 10, 12 eines Schienenfahrzeugsverbands 14 in einer schematischen Seitenansicht. Die Fahrzeugeinheiten 10, 12 sind mittels einer Schienenfahrzeugsübergangseinheit 16 miteinander gekoppelt. Die Schienenfahrzeugsübergangseinheit 16 weist hierzu eine mechanische Kopplung 18 sowie eine Datenübertragungsvorrichtung 20 zur Herstellung einer Datenverbindung zwischen den gekoppelten Fahrzeugeinheiten 10, 12 auf. Die Fahrzeugeinheiten 10, 12 sind in diesem Ausführungsbeispiel als Eisenbahnwagen zum Transport von Personen ausgebildet. Der Schienenfahrzeugverband kann insbesondere als Triebzug ausgebildet sein, wobei eine Ausbildung als mit einer Lokomotive gespannter Wagenverband möglich ist.

Die Datenübertragungsvorrichtung 20 umfasst eine erste Schnittstelle 22, die an der ersten Fahrzeugeinheit 10 montiert ist, und eine zweite Schnittstelle 24, die an der zweiten Fahrzeugeinheit 12 montiert ist. Die erste Schnittstelle 22 ist einerseits mit einer in der ersten Fahrzeugeinheit 10 verlegten Kabeleinheit 26 und andererseits mit einer Verbindung 28 verbunden, wobei die zweite Schnittstelle 24 einerseits mit dieser Verbindung 28 und andererseits mit einer in der zweiten Fahrzeugeinheit 12 verlegten Kabeleinheit 30 verbunden ist.

Die Kabeleinheiten 26, 30 sind insbesondere Bestandteile eines Passagierinformationssystems bzw. Passagierunterhaltungssystems des Schienenfahrzeugsverbands 14. Die Kabeleinheiten 26, 30, die Schnittstellen 22, 24 und die Verbindung 28 sind hierbei zur Übertragung eines Ethernet-Signals vorgesehen. Insbesondere sind sie zur Übertragung eines Ethernet-Signals mit einer Übertragungsrate von zumindest 1000 Mbit/s ausgelegt.

Bezug nehmend auf Figur 2 weisen die Kabeleinheiten 26, 30 hierzu jeweils ein Kabel 32 mit wenigstens acht Adern auf, insbesondere in der Form von vier Paaren 34 verdrillter Adern. Der Übersichtlichkeit halber sind die Adernpaare ohne Verdrillung dargestellt.
Die Verbindung 28 ist als ein Satz von zwei Kabeln 36, 38 ausgebildet, die jeweils vier verdrillte Adern aufweist, sodass die Datenübertragung zwischen den Fahrzeugeinheiten 10, 12 über zumindest acht Adern erfolgt. Die Kabel 36, 38 weisen hierbei jeweils eine Viererverseilung 44 verdrillter Adern auf. In den Schnittstellen 22, 24 werden die Kabel 36, 38 der Verbindung 28 jeweils in das Kabel 32 der entsprechenden Fahrzeugeinheit 10, 12 vereinigt, das ein mittels der Kabel 36, 38 der Verbindung 28 übertragenes Signal weiterführt.

Mittels der Datenübertragungsvorrichtung 20 können zwischen den Fahrzeugeinheiten 10, 12 Bild- und/oder Audiodaten übertragen werden, die mittels einer Ausgabeeinheit 40, welche z.B. als Bildschirm und/oder akustische Ausgabeeinheit ausgebildet ist, ausgegeben werden können. Eine in der Fahrzeugeinheit 10 angeordnete Steuereinheit 42 des Passagierinformationssystems bzw. Passagierunterhaltungssystems kann mittels der Datenübertragungsvorrichtung 20 eine in einer anderen Fahrzeugeinheit, z.B. der Fahrzeugeinheit 12 angeordnete Ausgabeeinheit 40 steuern bzw. sie kann diese Ausgabeeinheit 40 mit Bilddaten versorgen.

## Patentansprüche

1. Datenübertragungsvorrichtung zur Herstellung einer Datenverbindung zwischen zwei gekoppelten Fahrzeugeinheiten (10, 12) eines Fahrzeugsverbands (14) mit einer ersten Schnittstelle (22), die einer ersten Fahrzeugeinheit (10) zugeordnet ist, einer zweiten Schnittstelle (24), die einer zweiten Fahrzeugeinheit (12) zugeordnet ist, und einer Verbindung (28) zum Verbinden der Schnittstellen (22, 24) miteinander, wobei die Schnittstellen (22, 24) und die Verbindung (28) im gekoppelten Zustand die Datenverbindung bereitstellen,
**dadurch gekennzeichnet, dass**
die Verbindung (28) im gekoppelten Zustand einen Satz von Adern aufweist, die mittels zwei Kabeln (36, 38), die jeweils vier verdrillte Adern und eine Umhüllung, welche die vier Adern umhüllt und nach außen isoliert, aufweisen, bereit gestellt sind, wobei die zwei Kabel (36, 38) der Verbindung zwischen der ersten Schnittstelle (22) und der zweiten Schnittstelle (24) verlaufen,
die erste Schnittstelle (22) mit einer in der ersten Fahrzeugeinheit (10) verlegten Kabeleinheit (26) verbunden ist, die ein Kabel (32), welches einen Satz von acht Adern und eine Umhüllung, welche die acht Adern umhüllt und nach außen isoliert, aufweist, zur Führung eines Signals aufweist, welches mittels der zwei Kabel (36, 38) der Verbindung (28) zur zweiten Fahrzeugeinheit (12) übertragen wird, und
in den Schnittstellen (22, 24) die Kabel (36, 38) der Verbindung (28) in das Kabel (32) der entsprechenden Fahrzeugeinheit (10; 12) vereinigt werden.

2. Datenübertragungsvorrichtung nach Anspruch 1,
**dadurch gekennzeichnet, dass**
die Kabel (36, 38) jeweils zumindest eine Viererverseilung (44) verdrillter Adern aufweisen.

3. Datenübertragungsvorrichtung nach Anspruch 1 oder 2, **dadurch gekennzeichnet, dass**
die Schnittstellen (22, 24) und die Verbindung (28) zur Übertragung eines Ethernet-Signals vorgesehen sind.

4. Datenübertragungsvorrichtung nach Anspruch 3,
**dadurch gekennzeichnet, dass**
die Verbindung (28) zur Übertragung eines Ethernet-Signals mit einer Übertragungsrate von zumindest 1000 Mbit/s ausgelegt ist.

5. Datenübertragungsvorrichtung nach Anspruch 1,
**dadurch gekennzeichnet, dass**
die erste Schnittstelle (22) an eine Kabeleinheit (26) der ersten Fahrzeugeinheit (10) angeschlossen ist und die zweite Schnittstelle (24) an eine Kabeleinheit (30) der zweiten Fahrzeugeinheit (12) angeschlossen ist, wobei die Kabeleinheiten (26, 30) jeweils zumindest ein Kabel (32) zur Führung eines Signals aufweisen, welches mittels der Kabel (36, 38) der Verbindung (28) zur zweiten Fahrzeugeinheit (12) übertragbar ist.

6. Schienenfahrzeugsverband mit einem Satz von Fahrzeugeinheiten (10 ,12), die paarweise mittels einer Schienenfahrzeugsübergangseinheit (16) miteinander gekoppelt sind, welche eine Datenübertragungsvorrichtung nach einem der vorhergehenden Ansprüche aufweist.

7. Schienenfahrzeugverband nach Anspruch 6,
**dadurch gekennzeichnet, dass**
die erste und die zweite Fahrzeugeinheit (10, 12) jeweils eine Kabeleinheit (26, 30) umfassen, die jeweils zumindest ein Kabel (32) zur Führung eines Signals aufweisen, welches mittels der Kabel (36, 38) der Verbindung (28) zur zweiten Fahrzeugeinheit (12) übertragbar ist.

## Claims

1. Data transmission device for establishing a data connection between two coupled vehicle units (10, 12) of a vehicle combination (14) with a first interface (22) which is associated with a first vehicle unit (10), a second interface (24) which is associated with a second vehicle unit (12), and a connection (28) for connecting the interfaces (22, 24) to one another, wherein the interfaces (22, 24) and the connection (28) provide the data connection (28) in the coupled state,
**characterised in that**
the connection (28) comprises a set of wires in the coupled state, which are provided by means of two cables (36, 38) which each have four twisted-pair wires, and an enclosure which encloses and externally insulates the four wires, wherein the two cables (36, 38) of the connection run between the first interface (22) and the second interface (24),
the first interface (22) is connected to a cable unit (26) laid in the first vehicle unit (10), which has a set of eight wires and an enclosure which encloses and externally insulates the eight wires, for routing a signal which is transmitted to the second vehicle unit (12) by means of the two cables (36, 38) of the connection (28), and
in the interfaces (22, 24) the cables (36, 38) of the connection (28) are combined into the cable (32) of the corresponding vehicle unit (10; 12).

2. Data transmission device according to claim 1,
**characterised in that**
the cables (36, 38) each have at least one quad formation (44) of twisted-pair wires.

3. Data transmission device according to claim 1 or 2,
**characterised in that**
the interfaces (22, 24) and the connection (28) are provided for transmitting an Ethernet signal.

4. Data transmission device according to claim 3,
**characterised in that**
the connection (28) is designed for the transmission of an Ethernet signal with a transmission rate of at least 1000 Mbit/s.

5. Data transmission device according to claim 1,
**characterised in that**
the first interface (22) is connected to a cable unit (26) of the first vehicle unit (10) and the second interface (24) is connected to a cable unit (30) of the second vehicle unit (12), wherein the cable units (26, 30) each have at least one cable (32) for routing a signal which can be transmitted to the second vehicle unit (12) by means of the cables (36, 38) of the connection (28).

6. Rail vehicle combination having a set of vehicle units (10, 12) which are coupled to one another in pairs by means of a rail vehicle transition unit (16) which has a data transmission device according to one of the preceding claims.

7. Rail vehicle combination according to claim 6,
**characterised in that**
the first and the second vehicle unit (10, 12) each comprise a cable unit (26, 30), each of which has at least one cable (32) for routing a signal which can be transmitted to the second vehicle unit (12) by means of the cables (36, 38) of the connection (28).

## Revendications

1. Dispositif de transmission de données pour la production d'une liaison de données entre deux unités ( 10, 12 ) de véhicules attelés d'une rame ( 14 ) de véhicules, comprenant une première interface ( 22 ) qui est associée à une première unité ( 10 ) de véhicules, une deuxième interface ( 24 ) qui est associée à une deuxième unité ( 12 ) de véhicules et une liaison ( 28 ) pour relier entre elles les interfaces ( 22, 24 ), les interfaces ( 22, 24 ) et la liaison ( 28 ) procurant à l'état attelé la liaison de données,
**caractérisé en ce que**
la liaison ( 28 ) a à l'état attelé un jeu de brins qui sont procurés au moyen de deux câbles ( 36, 38 ) ayant chacun quatre brins torsadés et une gaine qui entoure les quatre brins et les isole vers l'extérieur, les deux câbles ( 36, 38 ) de la liaison s'étendant entre la première interface ( 22 ) et la deuxième interface ( 24 ),
la première interface ( 22 ) est reliée à une unité ( 26 ) de câble disposée dans la première unité ( 10 ) de véhicules qui a, pour le passage d'un signal, un câble ( 32 ) ayant un jeu de huit brins et une gaine qui entoure les huit brins et qui les isole vers l'extérieur, signal qui est transmis au moyen des deux câbles ( 36, 38 ) de la liaison ( 28 ) à la deuxième unité ( 12 ) de véhicules, et
dans les interfaces ( 22, 24 ), les câbles ( 36, 38 ) de la liaison ( 28 ) sont réunis dans le câble ( 32 ) de l'unité ( 10, 12 ) de véhicules correspondante.

2. Dispositif de transmission de données suivant la revendication 1,
**caractérisé en ce que** les câbles ( 36, 38 ) ont chacun au moins un câblage ( 44 ) quadruple de brins torsadés.

3. Dispositif de transmission de données suivant la revendication 1 ou 2,
**caractérisé en ce que**
les interfaces ( 22, 24 ) et la liaison ( 28 ) sont prévues pour la transmission d'un signal Ethernet.

4. Dispositif de transmission de données suivant la revendication 3,
**caractérisé en ce que**
la liaison ( 28 ) est conçue pour la transmission d'un signal Ethernet à une vitesse de transmission d'au moins 1000 Mbit/s.

5. Dispositif de transmission de données suivant la revendication 1,
**caractérisé en ce que**
la première interface ( 22 ) est raccordée à une unité ( 26 ) de câble de la première unité ( 10 ) de véhicules et la deuxième interface ( 24 ) est raccordée à une unité ( 30 ) de câble de la deuxième unité ( 12 ) de véhicules, les unités ( 26, 30 ) de câble ayant chacune au moins un câble ( 32 ) de passage d'un signal, qui peut être transmis à la deuxième unité ( 12 ) de véhicules au moyen des câbles ( 36, 38 ) de la liaison ( 28 ).

6. Rame de véhicules ferroviaires ayant un jeu d'unités ( 10, 12 ) de véhicules qui sont attelées entre elles par paire au moyen d'une unité ( 16 ) de transmission de véhicules ferroviaires qui a un dispositif de transmission de données suivant l'une des revendications précédentes.

7. Rame de véhicules ferroviaires suivant la revendication 6,
**caractérisé en ce que**
la première et la deuxième unité ( 10, 12 ) de véhicules comprennent chacune une unité ( 26, 30 ) de câble, qui ont chacune au moins un câble ( 32 ) de passage d'un signal, lequel peut être transmis à la deuxième unité ( 12 ) de véhicule au moyen des câbles ( 36, 38 ) de la liaison ( 28 ).
